# EUROPEAN PATENT APPLICATION

(11) **EP 1 463 000 A2**
(43) Date of publication of application: **29.09.2004**
(21) Application number: 04005631.9
(22) Date of filing: 10.03.2004
(51) Int. Cl.: G06T 11/60

(54) **Automated creation and prepress preparation of bleed tabs in printed documents**

(30) Priority: 11.03.2003 US 453621 P
(71) Applicant: Eastman Kodak Company, Rochester, New York 14650 (US)
(72) Inventor: Roztocil, Tomas, Caledonia NY 14423 (US); Savino, Ronald F., Rochester NY 14612 (US)
(74) Representative: Haile, Helen Cynthia

(57) **Abstract**

A method of automatically applying bleed tabs to a document to be printed is disclosed. Upon receipt of an electronic copy of the document to be printed, a graphical user interface (GUI) window (30) is provided on a job preparation workstation (116) or a storefront workstation (114). By way of this window (30), various fields (32, 34, 35, 36) are provided by way of which the user can define various attributes of the bleed tabs, including the tab text, page ranges, font and size, the number of tab cuts, and the like. The workstation receives these inputs, and applies the bleed tabs to a ready-for-printer format electronic copy of the document.

## Description

### BACKGROUND OF THE INVENTION

This invention is in the field of digital printing, and is more specifically directed to the automated generation of printed output using multiple printing machines.

Recent advances in the field of digital computer hardware and computer software have provided a large and still-increasing number of computer users with highly sophisticated document creation tools. Many business and individuals now have the ability to create pleasing and creative high-quality documents from their personal computer workstations. These documents include conventional business documents, books, brochures, signage, and the like, which range in complexity from simple text documents to complex documents that include full-color images and multiple paper sizes and types. Indeed, the term "desktop publishing" has come into vogue, to describe the capability of a common computer user to publish works that previously required expensive equipment and highly trained personnel. These improved computer tools have also increased the productivity of trained graphic artists in creating and publishing printed works.

Despite the deployment of desktop publishing capability, commercial print shops and corporate copy departments are still used to print documents in high volume, and with special finishing features such as binding. Indeed, the widespread deployment of modern document preparation and authoring may be considered to have increased the demand for the services of commercial and corporate print shops.

In a typical print shop transaction, the customer provides the document or documents to be printed either in hard copy or electronic form, such as on a floppy disk or compact disc, or transmitted over the Internet. The customer also specifies the desired quantity and form of the printed output. Examples of the various forms available for the printed output include a bound booklet, a tri-fold brochure, or a tabbed three ring bound notebook. The combination of the original document and the instructions for its printing is typically referred to as a "job". In the typical print shop, the customer delivers the documents and verbal instructions to a clerk, who will in turn document these instructions on a "ticket" or "job ticket". An operator will then operate one or more production printers to produce the finished output from the delivered document, and according to the instructions on the ticket. This is accomplished by preparing the document for production printing, load the printing machines with the appropriate materials such as paper stock and binding materials, and quality control inspection of the finished output.

Job preparation by print shop personnel is often required because the documents provided by the customer are generally not ready to be forwarded to the production printer. For example, some customer-produced documents may be raw manuscripts that still require basic formatting, such as the setting of margins and selection of typography features. Other documents may be in a form produced by an authoring application program, such as a word processor, computer aided design application, or graphics draw or paint program. Even for documents that are formatted by an authoring application, this formatting is typically not ready for printing. For example, the document may not include instructions accounting for "binder's creep" that can cause text that is too close to the margin to become obscured when bound. Imposition may be required, to set the first page of every chapter of a book to an odd page, or to effect booklet or pamphlet imposition, or n-up imposition. In extreme cases, the customer may bring in multiple documents and ask the print ship to assemble the documents as "chapters" of a book, and add a cover and binding.

Many bound printed documents include tabbed sections for easy reference. Examples of these types of documents in the business context vary widely, including business plans, legal opinions and documents, government filings, reference manuals for equipment and software products, other instructional material, and the like. The tabbing of sections within these multi-chapter or multi-section documents permits the reader to easily find a particular section of the bound document. Many books, especially reference books, also included tabbing by chapter or section, for the convenience of the reader as he or she browses for a particular item or topic.

Bleed tabs refer to a type of document tab on which text and graphics are printed along the outside edge of the page. The term "bleed" refers to printing this information outside of the area on that page in which the normal printed text and graphics would or does appear. Bleed tabs typically include a filled area extending to the edge on each page within a chapter or section, to serve as a thumbnail locator of that chapter or section. The distinction between bleed tabs and "regular" tabs is described, by way of example, in U.S. Patent Application Publication US 2002/0131075, published September 19, 2002. In short, bleed tabs refer to specific outside-of-margin areas of the document pages, where a regular tab is generally formed on a separate sheet from that of the document, often extending on a cut beyond the page boundaries.

As mentioned above, the rapid improvements in computer technology have enabled users to carry out a large portion of the work involved in preparing a printed document. Under conventional techniques, however, the defining and arrangement of bleed tabs is quite time consuming, requiring a significant effort in defining the oversize media, the location of tab text outside-of-margin on the document pages, placing the bleed tabs on each page of the document, associating the bleed tabs with chapters or sections of the document, and the like. This complexity causes bleed tabbed printed documents to be quite expensive in time or contractor cost, increasing the cost of the printed document or, in extreme cases, forcing the publisher to dispense with the bleed tabs altogether.

By way of further background, United States Patent Application Publications US 2001/0043346 A1 and US 2001/0044868 A1, both published November 22, 2001, describe systems and methods for visually representing and modifying tabs in production printing.

### BRIEF SUMMARY OF THE INVENTION

It is therefore an object of this invention to provide a simplified and effective user interface and method of operation to electronically create and size bleed tabs within an electronic copy of a document to be printed.

It is a further object of this invention to provide such a method that permits the creator to locate and define the position and attributes of the bleed tabs within the document.

It is a further object of this invention to provide such a method that facilitates the modifying of such bleed tab attributes as orientation, fill color and density, text font, size, and color, and the like.

It is a further object of this invention to provide such a method that permits the assigning of bleed tabs to selected pages, including each page of the chapter or section, in mirror image fashion on duplexed pages, and to multiple locations and positions along each document page.

It is a further object of this invention to provide such a method that enables the generation of a table of contents of the aggregated tab information.

It is a further object of this invention to provide such a method that does not disturb the page numbering of the document to be printed.

Other objects and advantages of this invention will be apparent to those of ordinary skill in the art having reference to the following specification together with its drawings.

The present invention may be implemented as part of a document authoring or print shop workflow management software system, in which an associated computer program receives inputs regarding multiple bleed tabs to be inserted into the document, including the position and attributes of the bleed tabs, pages with which each bleed tab is associated, and the like. The inputs are preferably received by way of a graphical user interface page. Execution of the associated program modifies the ready-for-printer document to include the bleed tabs in the printed output.

### BRIEF DESCRIPTION OF THE SEVERAL VIEWS OF THE DRAWING

Figure 1 is a schematic block diagram, illustrating a networked printing shop arrangement into which the preferred embodiment of the invention may be implemented.

Figure 2 is a flow diagram illustrating the operation of the printing shop arrangement of Figure 1, according to the preferred embodiment of the invention.

Figure 3 is an illustration of a windowed application, executed by a workstation in the networked arrangement of Figure 1, according to the preferred embodiment of the invention.

Figure 4 is a flow diagram illustrating the application of bleed tabs to a document in electronic form, according to the preferred embodiment of the invention.

### DETAILED DESCRIPTION OF THE INVENTION

The present invention will be described in connection with its preferred embodiment, which includes a printing environment, such as a commercial print shop or a corporate printing facility, operated by a network of servers and workstations. It is contemplated, however, that this invention may be applied to a wide range of printing applications and systems, in which the benefits of this invention will accrue. Accordingly, it is to be understood that this description of the preferred embodiment of the invention is presented by way of example only, and that this description is not to limit the true scope of the invention as claimed.

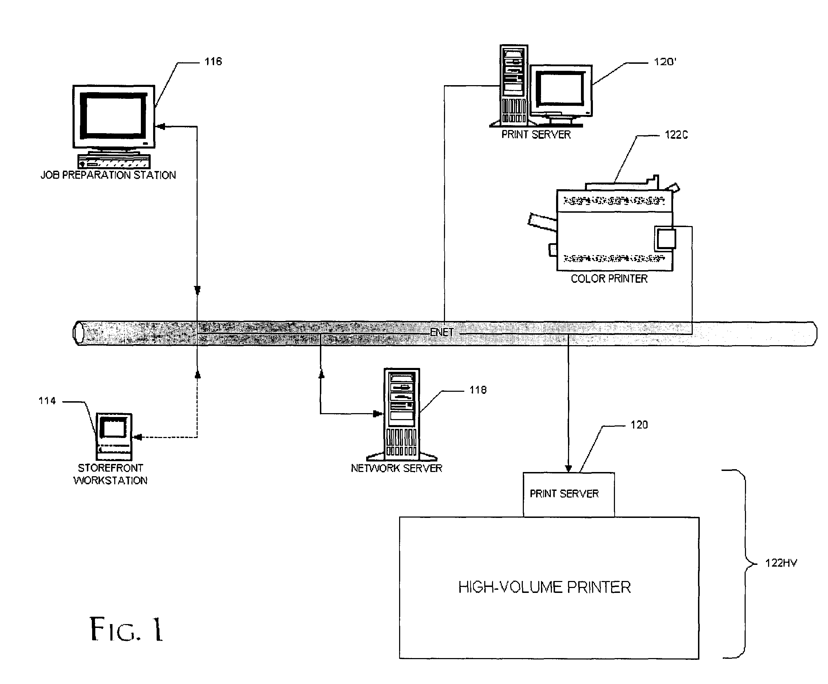

Figure 1 illustrates a portion of a print shop environment into which the preferred embodiment of the invention is implemented. The overall print shop environment in which the portion of Figure 1 resides can be quite varied, depending upon the facility and its function (e.g., commercial service bureau, or corporate print shop). An example of a full service commercial high volume print shop configuration into which the portion illustrated in Figure 1 can be implemented is described in U.S. Patent No. 6,407,820 B1. This U.S. Patent No. 6,407,820 B1 also describes an exemplary workflow into which the preferred embodiment of the invention can be readily implemented, to which the following description will refer by way of example.

In the environment of Figure 1, various computer stations are networked with multiple printing output devices (printers) 122HV, 122C (referred to in general as printing output devices 122). These computer stations include one or more job preparation stations 116, one or more network servers 118, and at least one print server 120. Additional workstations, for example so-called "storefront" workstations 114 for use by print customers in the context of a commercial print shop or service bureau, may be optionally included in the environment. Of course, the number of stations 114, 116, servers 118, 120, and printing output devices 122 will vary with the size and capability of the print shop environment. In this example, station 116, servers 118, 120, and printers 122C, 122HV are interconnected over a conventional Ethernet network ENET. Of course, other network arrangements and technologies, including both local area network and wide area networks of various configurations, and combinations thereof, can alternatively be used as the network backbone.

Job preparation station 116 is preferably a personal computer or workstation, loaded with and capable of executing workflow management software for the creation, editing, and managing of print jobs. A preferred example of job preparation station 116 is a conventional modern computer hardware platform, such as a personal computer or workstation based on PENTIUM class microprocessors available from Intel Corporation or ATHLON class microprocessors available from Advanced Micro Devices, Inc., on which the IMAGESMART DOCUMENT MASTERING software suite, available from Heidelberg Digital, L.L.C., is installed. In its job preparation and management functions, it is contemplated that job preparation station 116, with its software resources, provides the system user, such as the end print customer or print shop personnel, with the ability to define the print job and receive the input documents. Alternatively, or in combination, storefront workstations 114 may be provided to provide the end customer or print shop retail clerk with job submission and definition functions; storefront workstations 114 may similarly be implemented by way of conventional personal computers or workstations, deployed at the print shop environment and connected to network ENET. Job preparation station 116 also preferably provides the print shop personnel with the ability to include added-value print service functions such as adding page numbers across multiple documents, Bates number successive pages according to an external numbering scheme, adjust the page layout for tab stock, align the printed pages to account for binding, and adjust the document to account for printing artifacts such as binder's creep and the like.

Network server 118 is a conventional network server, as known in the art, which may optionally be included in the network according to this embodiment of the invention. When implemented in this print shop environment, network server 118 may include a document library for the storage of documents that are to be forwarded to and printed by printers 122. Exemplary implementations of the document library within network server 118 include the DOCSMART document management system available from MosaicSoft, the INTRA.DOC document management system available from Intranet Solutions, Inc., and the DOCFUSION document management system available from Hummingbird, Inc. The computer processing hardware of network server 118 may be a conventional server, as known in the art. Network server 118 preferably includes software operating according to the Open Document Management Architecture (ODMA) standard. The computing capability of network server 118 is preferably of adequate capacity and performance to permit the manipulation, management, storage, and archiving, within its document library, of both the documents and job tickets of print jobs for the shop. Network server 118 also preferably facilitates and manages the flow of print jobs from storefront workstations 114, if present, to job preparation station 116, from job preparation station 116 to print servers 120 and to printing output devices 122, in the conventional manner and also according to the following description. Alternatively, the document library and print job management functions may be performed by job preparation station 116 itself, in which case network server 118 need not be present. In this alternative arrangement, job preparation station 116 will submit the jobs directly from its own storage resources to printing output devices 122.

Print server 120 is a computer resource located within the overall network, for providing such functions as spooling and queuing of print jobs. According to the preferred embodiment of the invention, print server 120 is a computer resource implemented as part of a printer, such as high-volume printer 122HV shown in Figure 1. Alternatively, or in addition to print server 120, external print server 120' may be implemented in the form of a conventional computer workstation coupled to network ENET that operates a software print server engine and software print server application, running under a UNIX, WINDOWS, or another operating system. If both print server 120 in printer 122HV and external print server 120' are implemented, external print server 120' may provide a first queue of print jobs, with printer-based print servers (such as print server 120 in high-volume printer 122HV) queuing print jobs for that print resource. Further in the alternative, print server 120 may be a software print server engine and application running on another computer or workstation already in the network, such as job preparation station 116 or network server 118. The print server application provides a user interface, under which the operator can configure and manage the operation of the print server. The print server engine provides automated processes for spooling and queuing print jobs, including the directing of various print jobs to specific ones of printers 122. In the case of an external print server, the engine may also balance the print load among the various printers 122 to maximize throughput and utilization, and provide a communication gateway for translating the multiple input communication and print protocols into protocols comprehendible by printers 122.

According to this embodiment of the invention, printers 122 in the print shop environment of Figure 1 include color printer 122C, an example of which is the NEXPRESS 2100 color printer available from Heidelberg USA, Inc., and high-volume printer 122HV, an example of which is the DIGIMASTER 9110 network imaging system or the DIGIMASTER 9150i digital press, both available from Heidelberg USA, Inc. A typical implementation of high-volume printer 122HV includes multiple sources of paper stock, for supplying one or more types of media upon which high-volume printer 122HV can draw from and print upon. Also in this example, printer 122HV includes the conventional functions of an electrographic marking engine, a fuser, and a finishing station. The finishing station groups, staples, punches, folds, binds, and otherwise arranges printed pages produced by the marking engine and fuser, according to the manner indicated on a job ticket generated by the print customer, and as instructed from the job preparation process. While it is contemplated that high-volume printer 122HV and color printer 122C in this environment are of the electrographic (or electrophotographic) type, due to the high throughput and high quality provided by this printing technology in modern printers, any type of marking technology may be used in connection with this invention. In addition to the printers illustrated in Figure 1, other printing output devices 122 having different capabilities and performance levels, as well as different printing costs per page, may also be implemented in the print shop environment.

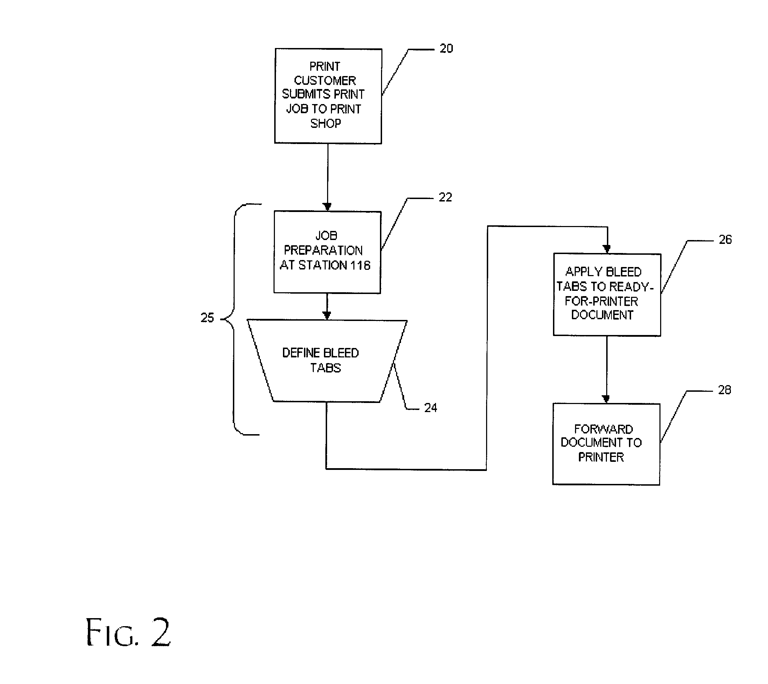

The general operation of the print shop environment of Figure 1 according to the preferred embodiment of the invention will now be described relative to Figure 2. This operation begins with the submission of a print job by the print customer, shown as process 20. As described in the U.S. Patent No. 6,407,820 B1, this process 20 includes the placing of an order with the print shop, whether in person, on-line, by mail, or over the telephone. The customer submission of process 20 also includes the customer's delivery of the document input to the print shop in person, on-line, or by mail. In addition, as suggested by Figure 1, the submission of the job in process 20 may be made from a storefront workstation 114, at which the customer may interactively define the print job (number of copies, paper options, finishing options), and provide an electronic copy of the document to be printed; hard copy input may also be scanned and digitized at storefront workstation 114. A job "ticket" may be initiated in this process 20, such a job ticket (either in electronic or paper form) including the identity of the customer, the number of copies made, details about the paper and binding options selected, printing options such as image shifts, edge erase, and the like, and other information pertaining to the print job and how the job is to be performed.

In process 25, preparation of the print job is next performed. It is contemplated that process 25 will typically be executed by print shop personnel at job preparation station 116 in cooperation with network server 118, in installations such as that shown in Figure 1. Alternatively, it is contemplated that the print customer may perform part or all of job preparation process 25 at storefront workstation 114, in the case where customer submission process 20 is performed by submission of an electronic copy of the document to be printed. Indeed, it is contemplated that the present invention will facilitate easy insertion of bleed tabs into the electronic document itself, to such an extent that many print customers will become able to themselves define and arrange bleed tabs for their printed documents.

Preparation process 25 includes a conventional job preparation process 22 in which the submitted documents are prepared for printing according to the instructions stated in the job ticket. This preparation of process 22 thus effectively receives the document in whatever form submitted (whether already in electronic form, or as a hard copy, or a combination of these and other forms) and prepares a electronically stored digital "document" in a ready-for-printer format that can be submitted to printers 122. According to the preferred embodiment of the invention, the preferred ready-for-printer format is the PORTABLE DOCUMENT FORMAT ("PDF" or ".pdf") developed by Adobe Systems, Inc.. Other ready-for-printer formats that may be used in connection with this invention include the POSTSCRIPT format also developed by Adobe Systems, Inc., and the printer control language PCL developed by Hewlett Packard Company, but for clarity of this description the PDF format will be used by way of example.

A wide variety of tasks may be involved in job preparation process 22, depending upon the form of the submitted input. Pages that are submitted in hard copy form (rather than submitted as electronically stored output from scanned pages) are preferably scanned or otherwise digitized into a ready-for-printer format in process 22. Documents that are in their native application file formats (e.g., documents in their form as produced by a word processing program such as the WORD program available from Microsoft Corporation) are converted into the ready-for-printer format in process 22. Image files, even those such as the Tagged Image File Format ("TIFF") in which the images are effectively bit map images, are also converted into the ready-for-printer format in process 22, if only to include printer control instructions for arranging the images on the pages. Further, job preparation process 22 also includes the sequencing and arranging of the pages and files into the finished document, along with the inclusion of covers, tabbed dividers, and other non-document features into the document to be printed. Job preparation process 22 further includes the modification of the ready-for-printer document to accommodate the printing process itself, such as removing artifacts in the scanned images, masking over unwanted text or images, inserting page numbers or Bates stamp numbers across the document, and accounting for inaccuracies in the printing process such as binder's creep.

According to this preferred embodiment of the invention, preparation process 25 also includes, as one of its functions, bleed tab definition process 24. The particular order of functions within preparation process 25, and specifically the point in time at which bleed tab definition process 24 is performed within the overall preparation process 25, is not particularly restricted. However, as will be apparent from the following description, it is preferred that bleed tab definition process 24 be performed after the pagination of the document to be printed, considering that process 24 includes the specifying of the particular pages on which specific bleed tabs are to be printed. As such, it is contemplated that job preparation process 22 preferably produces a copy of the document to be printed in a viewable ready-for-printer format (e.g., the PORTABLE DOCUMENT FORMAT), from which the user can identify the pages within each chapter or section of the document to be printed.

According to this preferred embodiment of the invention, identification process 24 is performed by way of workflow management software executed by job preparation station 116. An example of workflow management software into which the functionality of identification process 24 can be implemented is the IMAGESMART DOCUMENT MASTERING software suite available from Heidelberg USA, Inc.. An example of the functionality of the workflow management software of this preferred embodiment of the invention, and corresponding to the IMAGESMART DOCUMENT MASTERING software suite, is described in U.S. Patent Publication No. 2002/0131075 A1.

Specifically, bleed tab definition process 24 is preferably implemented by way of an additional function provided within the IMAGESMART DOCUMENT MASTERING software. This software preferably operates according to a graphical user interface (GUI) approach for workflow management represents various objects such as documents, tickets, operations, and hardware resources, on a computer video display as icons, or in a tree-structure or pull-down menu manner, by way of which a human user can select and execute various operations using a conventional computer pointing device. In the preferred embodiment of the invention, this additional function is provided by way of a pull-down menu within the GUI of the IMAGESMART DOCUMENT MASTERING software. For example, a toolbar within one of the GUI windows may include a "Tools" pull-down menu, within which a "Bleed Tab Maker" tool or function is selectable, and by way of which bleed tab definition process 24 is initiated.

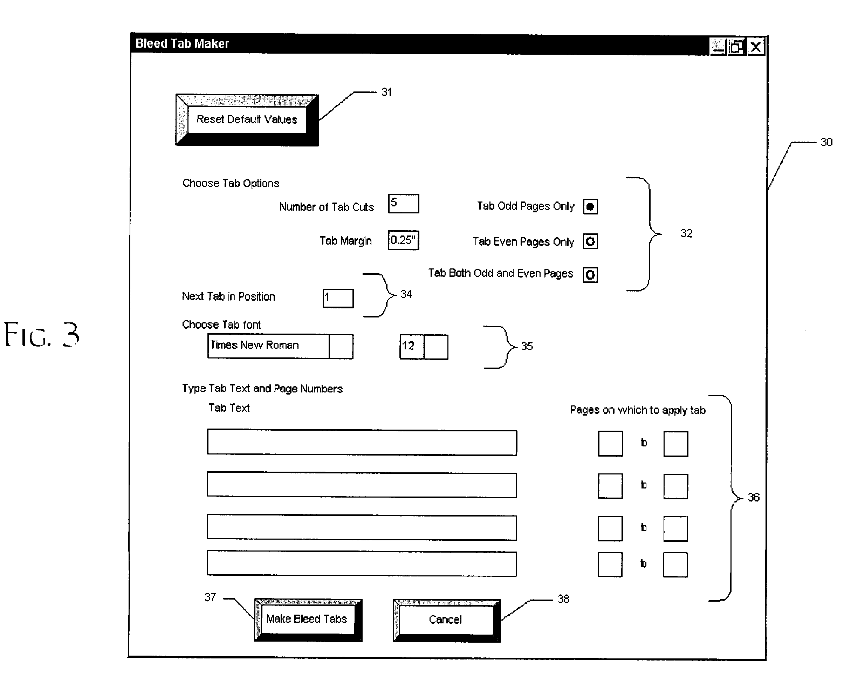

Figure 3 illustrates window 30 displayed on a video display, for example at job preparation station 116 or storefront workstation 114, by way of which the user defines various attributes about the desired bleed tabs for a document in an instance of bleed tab definition process 24, as embodied in a Bleed Tab Maker tool according to this preferred embodiment of the invention. Window 30 is a GUI window including user-definable buttons, pull-downs, and fillable text entry fields, as well known in the art. The particular fields illustrated in window 30 are shown by way of example only, it being understood that other fields may additionally be used instead of or in addition to those illustrated in Figure 3.

Reset button 31 is a button that serves to reload default values into some or all of the fields in the remainder of window 30. These default values will, of course, facilitate the generation of bleed tabs for a new user of the Bleed Tab Maker tool, by defining useful settings for a somewhat generic set of bleed tabs. Within fillable field 32, the user defines various tab options. In this example, these options include the number of tab "cuts", or possible bleed tab positions along the edge of a document page, and include the tab margin from the edge of the page. Other options include the selection of whether only odd pages, only even pages, or both odd and even pages are to receive the bleed tabs. If both odd and even pages receive bleed tabs, it is contemplated that the even pages will receive a mirror image of the bleed tab printed on odd pages (i.e., printed on the left edge rather than the right edge, with text still facing in toward the binding), as conventional for printed books with bleed tabs on all pages.

Other attributes of bleed tabs may also be defined by the Bleed Tab Maker tool, including selection of the edge or edges of the pages that are to receive the bleed tabs. For example, typical bleed tabs are positioned at the edge of the document page that is opposite from the binding; alternatively or additionally, bleed tabs may be placed at the top or bottom edge of the document pages. The fill color and density of the bleed tab, or a fill gradient if desired, may be selected at this point. The size of the bleed tabs (i.e., the size of the fill) may also be selected or modified at this point in the process; alternatively, the bleed tab fill area size may be automatically determined by the number of tab cuts selected in field 32.

Fillable field 34 identifies the next tab cut, or position, to be printed, providing the user with control over the arrangement of bleed tabs in the document. In fillable field 35, the user defines the font and size of the text to be printed in the bleed tabs; in addition, it is contemplated that other text options such as italic, underlined, bold, text color, and the like may be selectable by additional pull-down options within field 35, if desired. It is further contemplated that horizontal formatting options such as left-justified, right-justified, or horizontally centered, and vertical formatting options such as top edge, bottom edge, or vertically centered, may also be selectable by additional pull-down options within field 35. Other additional options that may be included within field 35 can include the orientation of the text within the bleed tab field; for example, the text may be oriented to face inward (toward the binding), outward (away from the binding), or vertically.

The specifying of other location attributes of the bleed tabs may vary still further, depending upon the desired capabilities of the system. For example, it is contemplated that post-press finishing operations may change the location of page edges, such as is the case if multiple pages of a book are printed on the same media sheets. The capability of specifically positioning the bleed tabs within the interior of the printed sheets, but still outside of the areas reserved for printed text, may therefore be included within GUI window 30, as a separate field or as an additional "Advanced" option that can be selected by way of a button in GUI window 30.

In fillable field 36, the user is able to define the text to be applied to the specific bleed tabs, and the page range over which that text is to be applied. The user simply enters the text into the fillable fields under the "Tab Text" heading; it is also contemplated that the Bleed Tab Maker may also enable additional items, such as icons or other graphics elements, to be included within these Tab Text fields. The page range entered in fillable field 35 of course specifies the chapter or section within the document that is to receive the associated text; the specific odd or even (or both) pages within this range that is actually printed with the tab text is of course specified in tab option field 32, as described above. Of course, the number of entries permitted within fillable field 36 will depend upon the number of tabs to be applied to the document; as such, an additional function for adding more tabs may be made available within window 30, for example by way of a button that, when clicked by the user, displays additional fillable text and page number range fields for additional tabs. As known in the art, the total number of bleed tabs may number more than the available number of tab "cuts", as the bleed tabs may re-use the same position for later chapters.

Following entry of the appropriate tab text and page ranges, the user applies the specified bleed tabs to the document to be printed, by clicking button 37. Alternatively, bleed tab preparation process may be cancelled by clicking button 38 in this exemplary GUI window 30.

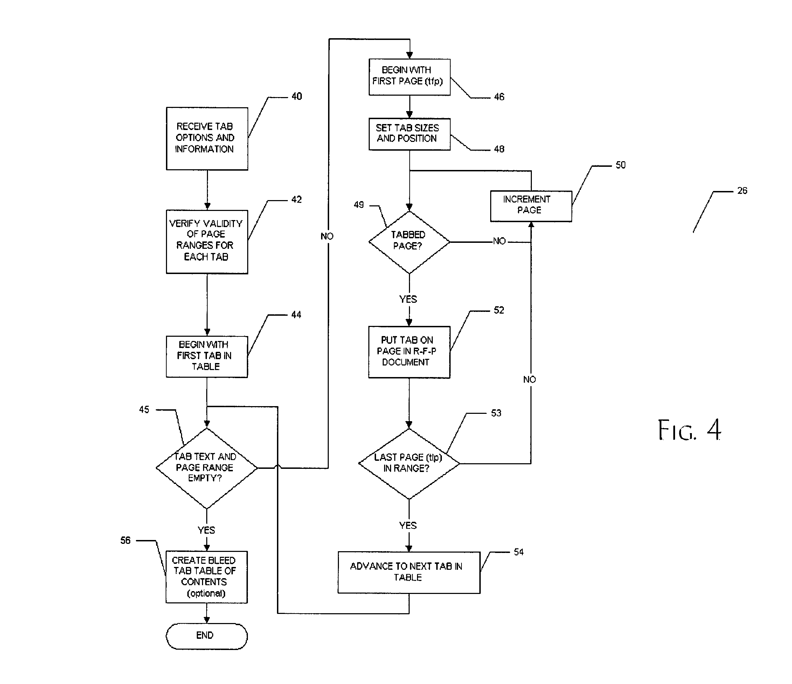

Upon the user clicking button 37 in window 30, job preparation station 116 or storefront workstation 114, as the case may be, modifies the electronic version of the document to be printed to include the specified bleed tabs within that document. This process is shown in Figure 2 by process 26. According to the preferred embodiment of the invention, the automated application of the specified bleed tabs to the document is performed by the IMAGESMART DOCUMENT MASTERING software in its generation of the document in a ready-for-printing format, such as the PORTABLE DOCUMENT FORMAT (.pdf). It is contemplated that this operation of process 26 will be implemented by way of one or more software routines, or computer programs, executable by the appropriate one of workstations 114, 116. In this regard, it is contemplated that those skilled in the art having reference to this specification will be readily able to derive the specific computer program instructions suitable for a given workstation to carry out this operation, in the appropriate computer language. The particular functions involved in process 26, according to the preferred embodiment of the invention, will now be described in further detail relative to Figure 4.

The application of bleed tabs to the document, in process 26, begins with process 40 in which the information entered by the user in bleed tab generation process 25 is retrieved by the operative workstation (e.g., either job preparation workstation 116 or storefront workstation 114, as the case may be). In this process, the font selection and font size are retrieved and stored, as are the tab text strings and associated page ranges for each of the desired tabs. In process 42, the workstation validates this information, typically by determining that the information is at least self-coherent. For example, the workstation may retrieve the first and last page numbers for each of the tabs, and ensure that these values are within the total number of pages of the document itself. Additionally, for bleed tabs along the outer edge of the printed document that are to refer to non-overlapping chapters and sections, the first page of a tabbed section is compared against the last page of the previous tabbed section to ensure that the tabbed sections do not overlap. Alternatively, the overlapping of bleed tabs onto the same pages may be permitted, if desired. It is contemplated that these and other validation functions are performed in process 42 according to this embodiment of the invention. If this validation process fails, the workstation may either adjust the values of the page ranges to be coherent, or else return an exception or error to the user, as desired.

Assuming that the validation process completes successfully, the workstation next initializes its operation to the first bleed tab, in process 44. In decision 45, the workstation determines whether the tab text field and page number range entries for this tab, in field 36, are empty. If so (decision 45 is YES), the process is complete and no further bleed tabs are applied. If these entries of field 36 are not empty (decision 45 is NO), the application of this tab text over the specified page range begins with process 46, in which the first page (tfp) of the page range is read, and at which the application of the bleed tabs is to begin.

In process 48, the bleed tab attributes for this tabbed section are defined based on the tab attributes selected by the user via GUI window 30 in process 25. These attributes are common for the entire section, or page range, associated with this tab, and as such are preferably established once for all of the pages in this section. In this example, that tab position among the tab cuts is determined, for example by performing a modulo-m division of the number of the bleed tab in the entire set of bleed tabs, by the number of tab cuts selected in field 32. For example, the eleventh tab entry in a document having five tab cuts will appear in the first tab position (because 11=1 mod 5). Also at this time, the width of the bleed tab (i.e., along the edge of the page at which the bleed tabs are to appear) is calculated, using the known height of the document page, the tab margin entered by the user in field 32, and the number of tab cuts also entered by the user in field 32. This tab width is then used, in combination with the number of tab cuts and the tab position to define the starting and ending edges of the bleed tabs along this edge of the document page. These tab attributes are then applied, beginning with the first page in the section.

In decision 49, the workstation determines whether the current page is a tabbed page. As mentioned above relative to field 32 of window 30, the user has specified whether the bleed tabs are to be applied to even or odd numbered pages, or both. Decision 49 identifies the case that is active (even, odd, or both), and interrogates the current page number to determine whether the current page is to receive a bleed tab. If not (decision 49 is NO, as in the case of an even-numbered page when only odd-numbered pages are to be tabbed), the page is incremented in process 50, and decision 49 is repeated for this next page. If the page is to receive a bleed tab (decision 49 is YES), control passes to process 52.

In process 52, the workstation modifies the ready-for-printer document to include the appropriate commands to insert the bleed tab on the current page. This "make tab" function interfaces with the current authoring program, such as the ACROBAT authoring software available from Adobe Systems, Inc., to insert the desired tab information at the appropriate location on the current page. This process 52 uses the tab width and tab position information derived in process 48, and tab options such as font and size received in process 40, as is the tab text entered in field 36 of GUI window 30, along with the current fill colors, text colors, line widths, and the like for the document. These values and information are applied by the authoring software for creating the ready-for-printer document, to include the bleed tabs at the appropriate locations on the desired pages. It is therefore preferred that process 52 utilizes application program interfaces (APIs), or subroutines, or other conventional techniques known in the art, and appropriate for the authoring application, to effect the bleed tabs. The result of process 52 is a modified page in the electronic version of the document to be printed in a ready-for-printer format, but which now includes the bleed tab as defined by the user.

In decision 53, the workstation determines whether the current page is the last page within the page range associated with the current bleed tab. If not (decision 53 is NO), the page is incremented in process 50 and control returns to decision 49 to determine whether this next page is to receive a bleed tab, and the process continues as before. If the last page for this current bleed tab has been reached (decision 53 is YES), the workstation advances to the next tab entry (e.g., in field 36 of GUI window 30), and returns control to decision 45 to determine whether the text and page range entries for this next tab are empty. If not (decision 45 is NO), application process 26 applies the appropriate bleed tabs to the pages in this range, beginning from process 46. If the entries for this next bleed tab are empty, the process of applying bleed tabs is complete for this document.

According to this embodiment of the invention, optional process 56 may be performed upon completion of the application of all bleed tabs to the pages of the document. Typically, the bleed tab text and page number ranges exactly correspond to the various chapters or sections of the document. As such, the information used to apply the bleed tabs can be used to automatically generate a table of contents for the document. In process 56, the tab text entries in field 36 for each of the tabs are tabulated, along with their page number ranges, to create a table of contents for the document. If desired, an additional page or pages (which are unnumbered, or numbered outside of the document page numbers to not disturb the page numbers of the document) can be automatically generated and inserted into the appropriate location of the document.

Referring back to Figure 2, upon the completion of process 26, the document is ready to be forwarded to the appropriate printer 122 in the print shop environment of Figure 1. It is of course important, for the successful printing of the document as desired. that the selected printer 122HV, 122C is capable of printing bleed tabs in response to the corresponding data and commands contained within the ready-for-printer electronic file generated via processes 25 and 26. The NEXPRESS 2100, DIGIMASTER 9110, and DIGIMASTER 9150i printers available from Heidelberg USA, Inc. and mentioned above, are capable of printing documents with such bleed tabs, specifically from a ready-for-printer format such as a .pdf file. Accordingly, in process 28, the ready-for-printer document is forwarded by the appropriate resource (e.g., workstation 114, 116; network server 118; or print server 120, 120') to the desired one of printers 122C, 122HV. The document is then printed and finished as instructed according to the previously defined job ticket.

It is contemplated that this invention provides important advantages in the production of printed documents having the feature of bleed tabs. Use of this invention permits the automated generation of bleed tabs, in a manner that can be made sufficiently friendly and intuitive that the print customer can themselves design, edit, and apply bleed tabs, avoiding the difficulty of defining out-of-area printed elements on many pages involved in conventional bleed tab definition techniques. As a result, efficiency of the printing process, and of print shop personnel and equipment, is greatly improved by this invention.

While the present invention has been described according to its preferred embodiments, it is of course contemplated that modifications of, and alternatives to, these embodiments, such modifications and alternatives obtaining the advantages and benefits of this invention, will be apparent to those of ordinary skill in the art having reference to this specification and its drawings. It is contemplated that such modifications and alternatives are within the scope of this invention as subsequently claimed herein.

### REFERENCE LIST

- 20-28: process (steps)
- 30: window
- 31: reset button
- 32-36: fillable fields
- 37: button
- 38: button
- 40-56: process (steps)
- 114: storefront workstations
- 116: job preparation station
- 118: network server
- 120: print server
- 120': external print server
- 122: printing output devices
- 122C: color printer
- 122HV: high-volume printer

## Claims

1. A method of operating a computer to apply bleed tabs to a document to be printed, comprising the steps of:
receiving an electronic copy of the document from a user;
providing a graphical user interface display window by way of which the user selects attributes of a plurality of bleed tabs to be printed with the document;
receiving bleed tab attributes from the user via the graphical user interface display window, the bleed tab attributes including at least tab text for each of the plurality of bleed tabs, and a range of pages of the document to which each of the plurality of bleed tabs are to be printed;
generating a ready-for-printer electronic copy of the document including bleed tabs corresponding to the received bleed tab attributes.

2. The method of claim 1, further comprising:
receiving a hard copy of the document; and
generating the electronic copy of the document from the hard copy.

3. The method of claim 1, further comprising:
prior to the step of providing the graphical user interface display window, generating an electronic copy of the received document in a ready-for-printer format.

4. The method of claim 3, wherein the generating step comprises, for each of the plurality of bleed tabs:
defining the size and location of the bleed tab on a document page; and
for each page in the range of pages associated with the bleed tab, modifying the ready-for-printer format electronic copy of the document to apply a bleed tab corresponding to the defined size and location.

5. The method of claim 4, wherein the bleed tab attributes further comprise a tabbed indication corresponding whether bleed tabs are to be applied to even-numbered pages, odd-numbered pages, or both even and odd-numbered pages within the range of pages associated with each of the plurality of bleed tabs.

6. The method of claim 5, wherein the generating step further comprises:
before the modifying step, determining whether the page is a tabbed page according to the tabbed indication; and
then modifying the page if it is a tabbed page.

7. The method of claim 1, further comprising:
before the generating step, validating the bleed tab attributes.

8. The method of claim 1, further comprising:
after the generating step, creating a table of contents for the document using the bleed tab attributes.

9. The method of claim 1, wherein the bleed tab attributes further comprise a number of tab cuts to be used by the plurality of bleed tabs.

10. The method of claim 9, wherein the generating step further comprises:
defining the position of each of the plurality of bleed tabs using the number of tab cuts.

11. The method of claim 1, wherein the bleed tab attributes further comprise a font and size for the tab text.

12. The method of claim 11, wherein the bleed tab attributes further comprise text position formatting for the plurality of bleed tabs.

13. The method of claim 11, wherein the bleed tab attributes further comprise a color for the tab text.

14. The method of claim 1, wherein the bleed tab attributes further comprise a tab margin for the plurality of bleed tabs.

15. The method of claim 1, wherein the bleed tab attributes further comprise a fill density for the plurality of bleed tabs.

16. The method of claim 15, wherein the bleed tab attributes further comprise a fill color for the plurality of bleed tabs.

17. The method of claim 1, wherein the bleed tab attributes further comprise an orientation of the tab text for the plurality of bleed tabs.

18. The method of claim 1, wherein the bleed tab attributes further comprise a location of each of the plurality of bleed tabs.

19. A print shop environment, comprising:
at least one output print device for printing documents from a ready-for-printer format; and
at least one computer resource, programmed to perform a sequence of operations comprising the steps of:
receiving an electronic copy of the document from a user;
providing a graphical user interface display window by way of which the user selects attributes of a plurality of bleed tabs to be printed with the document;
receiving bleed tab attributes from the user via the graphical user interface display window, the bleed tab attributes including at least tab text for each of the plurality of bleed tabs, and a range of pages of the document to which each of the plurality of bleed tabs are to be printed;
generating a ready-for-printer electronic copy of the document including bleed tabs corresponding to the received bleed tab attributes; and
forwarding the ready-for-printer electronic copy to the output print device.

20. The environment of claim 19, wherein the sequence of programmed operations further comprises:
prior to the step of providing the graphical user interface display window, generating an electronic copy of the received document in a ready-for-printer format.

21. The environment of claim 20, wherein the generating step comprises, for each of the plurality of bleed tabs:
defining the size and location of the bleed tab on a document page; and
for each page in the range of pages associated with the bleed tab, modifying the ready-for-printer format electronic copy of the document to apply a bleed tab corresponding to the defined size and location.

22. The environment of claim 21, wherein the bleed tab attributes further comprise a tabbed indication corresponding whether bleed tabs are to be applied to even-numbered pages, odd-numbered pages, or both even and odd-numbered pages within the range of pages associated with each of the plurality of bleed tabs.

23. The environment of claim 22, wherein the generating step further comprises:
before the modifying step, determining whether the page is a tabbed page according to the tabbed indication; and
then modifying the page if it is a tabbed page.

24. The environment of claim 19, wherein the sequence of programmed operations further comprises:
after the generating step, creating a table of contents for the document using the bleed tab attributes.

25. The environment of claim 19, wherein the bleed tab attributes further comprise a number of tab cuts to be used by the plurality of bleed tabs.

26. The environment of claim 25, wherein the generating step further comprises:
defining the position of each of the plurality of bleed tabs using the number of tab cuts.
